# EUROPÄISCHE PATENTSCHRIFT

(11) **EP 3 359 348 B1**
(45) Veröffentlichungstag und Bekanntmachung des Hinweises auf die Patenterteilung: **26.05.2021**
(21) Anmeldenummer: 16788453.5
(22) Anmeldetag: 10.10.2016
(51) Int. Cl.: B25J 9/16, G05B 19/423

(54) **ROBOTERSYSTEM UND VERFAHREN ZUR STEUERUNG EINES ROBOTERSYSTEMS**
ROBOT SYSTEM AND METHOD FOR CONTROLLING A ROBOT SYSTEM
SYSTÈME ROBOT ET PROCÉDÉ DE COMMANDE D'UN SYSTÈME ROBOT

(30) Priorität: 08.10.2015 DE 102015012959
(43) Veröffentlichungstag der Anmeldung: 15.08.2018
(73) Patentinhaber: Haddadin Beteiligungs UG, 80538 München (DE)
(72) Erfinder: HADDADIN, Sami, 30173 Hannover (DE)
(74) Vertreter: Habermann, Hruschka & Schnabel
(86) Internationale Anmeldenummer: PCT/EP2016/074250
(87) Internationale Veröffentlichungsnummer: WO 2017/060538

(56) Entgegenhaltungen:
- EP-A1- 2 131 257
- EP-A2- 2 851 162
- EP-A2- 2 864 085
- DE-A1-102008 062 622
- DE-B3-102005 054 575
- DE-B3-102014 216 514

## Beschreibung

Die vorliegende Erfindung betrifft ein Robotersystem und ein Verfahren zur Steuerung eines Robotersystems.

Üblicherweise werden Robotersysteme so programmiert, dass ein Bediener über ein separates Gerät, bspw. einen Rechner, die notwendigen Befehle für das Robotersystem über eine entsprechende Benutzeroberfläche eingibt, beispielsweise im Rahmen einer Programmierung oder Parametrierung des Robotersystems.

Des Weiteren ist es bekannt, separate Eingabevorrichtungen am Robotersystem direkt vorzusehen, beispielsweise unmittelbar an einem Roboterarm, wie bspw. Schalter oder Taster, mit Hilfe von welchen unterschiedliche Operationen am Roboterarm aktiviert und dann durchgeführt werden können. Derartige Operationen umfassen z.B. Verfahren des Roboterarms im Raum, Notausschaltung bei Gefahr, Bestätigung einer Position usw.. Stets bewegt sich dabei der Bediener in unmittelbarer Umgebung des Robotersystems.

In einer direkten Mensch-Roboter Kollaboration (MRK) wird darüber hinaus meist nur das Positionieren des Endeffektors am Roboterarm durch haptische Interaktion zwischen Mensch und Roboter erledigt, indem der Mensch den Roboterarm per Hand in die gewünschte Stellung bringt.

Eine weiterführende und meist komplexere Interaktion wird derzeit nur über zusätzliche Eingabegeräte durchgeführt, wie dies bei der Programmierung oder Parametrierung des Robotersystems der Fall ist.

Für diese Art der Kollaboration ist es notwendig, dass der Nutzer immer wieder zwischen Roboterführung und der Bedienung des zusätzlichen Eingabegerätes hin und her wechselt. Dies ist umständlich und kann zudem zu gefährlichen Situationen führen, da der Nutzer sich immer wieder auf die Eingabegeräte konzentrieren und den sich potentiell bewegenden Roboter aus den Augen lassen muss.

Aus den Veröffentlichungen DE 10 2008 062 622 A1, EP 2 851 162 A2, EP 2 131 257 A1 und EP 2 864 085 A2 sind jeweils Robotersysteme nach dem Oberbegriff des Anspruchs 1 bekannt.

Ausgehend davon ist es eine Aufgabe der vorliegenden Erfindung, die Interaktion zwischen Mensch und einem Robotersystem zu erweitern und dabei eine verbesserte MRK-Umgebung zu schaffen. Darüber hinaus soll eine einfachere Bedienbarkeit des Robotersystems zur Ansteuerung diverser Operationen, die entweder von dem Robotersystem selbst durchgeführt werden sollen oder mit diesem in einer funktionalen Verbindung stehen, zur Verfügung gestellt werden.

Gelöst wird diese Aufgabe mit einem Robotersystem mit den Merkmalen nach Anspruch 1 sowie mit einem Verfahren zur Steuerung eines Robotersystems mit den Merkmalen nach Anspruch 9.

Die Erfindung schlägt folglich ein Robotersystem vor mit zumindest einem Roboterarm, einer Steuereinheit zur Steuerung des Roboterarms und einer Roboterarm-Sensorik, wobei die Steuereinheit und Roboterarm-Sensorik so ausgelegt sein sollen, dass sie auf vorherbestimmte haptische Gesten des Benutzers, die auf den Roboterarm wirken, so reagieren, dass das Robotersystem mindestens eine vorherbestimmte Operation ausführt, die der haptischen Geste zugeordnet ist.

Hierfür sind die Zuordnungen zwischen den möglichen haptischen Gesten und den mit diesen in Zusammenhang stehenden Operationen in einem Speicher abgelegt, der mit der Steuereinheit zusammenarbeitet.

Die Erfindung richtet sich vorzugsweise, jedoch nicht ausschließlich, an Robotersysteme, die zum manuellen Führen durch einen Bediener ausgelegt sind. Diese verfügen über eine integrierte Kraft- und Drehmomentsensorik, die gemäß der Erfindung dazu herangezogen werden kann und dementsprechend hierfür auch ausgebildet ist, die durch die haptischen Gesten eines Bedieners auf den Roboterarm oder nur auf Teile seiner Armglieder einwirkenden externen Kräfte, Momente und Drehmomente aufzunehmen und an die Steuereinheit weiterzuleiten.

Die Kräfte, Momente und Drehmomente können durch diverse Sensoren, wie bspw. Kraftmesssensoren, Drehmomentsensoren usw., aufgenommen werden, die sich entweder in den Gelenken, in der Basis und/oder allgemein in der Struktur des Robotersystems befinden. Es ist auch denkbar, dass die Gehäusestruktur eines Roboterarms zumindest abschnittsweise mit einer taktilen Haut überzogen ist, die eine Eingabe über einen oder mehrere Finger gestattet.

In einer Ausführungsform kann die Steuereinheit dementsprechend ausgebildet sein, die durch die haptischen Gesten erzeugten Kräfte und/oder Momente in Abhängigkeit ihrer jeweiligen Richtungen und/oder ihres jeweiligen Verlaufs unterschiedlichen Operationen zuzuordnen.

In einer weiteren Ausführungsform kann die Steuereinheit ausgebildet sein, die durch die haptischen Gesten erzeugten Kräfte und/oder Momente in Abhängigkeit ihrer jeweiligen Größen unterschiedlichen Operationen zuzuordnen.

Auch ist es möglich, dass die Steuereinheit ausgebildet ist, eine unterschiedliche zeitliche Abfolge von haptischen Gesten unterschiedlichen Operationen zuzuordnen, die dann in einer logischen Abfolge durchgeführt werden.

Die Erfindung geht mit dem Vorteil einher, dass die in diesen Robotersystemen bereits vorhandene Sensorik nicht nur dazu verwendet wird, eine reine Positionskontrolle des Endeffektors und Trajektoriensteuerung des Roboterarms, sowohl im Betrieb als auch während der Programmierung, zu unterstützen, sondern auch herangezogen werden kann, von einem Bediener durch haptische Gesten, wie bspw. Ziehen, Drücken, Stoßen, Drehen, bewusst erzeugte Kräfte, Momente und Drehmomente aufzunehmen und einer weiteren abstrakten Interaktion zwischen Mensch und Robotersystem zuzuführen.

In einer bevorzugten Ausführungsform weist das Robotersystem, eine Anzeigevorrichtung mit einer graphischen Benutzeroberfläche auf, in der einfachsten Form einen mit dem Robotersystem zur Steuerungs- oder Programmierungszwecken in Verbindung stehenden Rechner. Gemäß der Erfindung können die haptischen Gesten dann einer Steuerung auf der graphischen Benutzeroberfläche zugeordnet werden. Die Steuerung kann dabei zwei- oder dreidimensional erfolgen. Der Bediener kann in dieser Ausführungsform durch gezielten räumlich gerichteten Druck auf den Roboterarm einen Cursor oder eine Menüführung auf der Benutzeroberfläche bewegen.

Der Bediener muss nicht zwangsläufig die Hilfe einer graphischen Benutzeroberfläche in Anspruch nehmen, um entsprechende Bestätigungen oder Rückmeldungen seiner Aktionen von einem Programmiersystem zu erhalten.

So kann es gemäß der Erfindung vorgesehen sein, dass die Steuereinheit ausgebildet ist, eine Rückmeldung in Abhängigkeit der haptischen Geste zu erzeugen.

Die Rückmeldung kann auditiv und/oder visuell ausgebildet sein.

Vorzugsweise kann diese Rückmeldung jedoch auch durch den Bediener haptisch erfassbar ausgebildet sein. Für einen solchen Fall ist die Steuereinheit ausgelegt, das Ausmaß der Nachgiebigkeit für die Beweglichkeit des Roboterarms zu verändern, während die haptische Geste auf diesen einwirkt.

Drückt beispielsweise der Bediener seitlich gegen ein Armglied des Roboterarms, kann sukzessiv der Widerstand des Roboterarms gegen den durch die haptische Geste ausgeübten Druck erhöht werden, um den Bediener eine entsprechende Rückmeldung zu liefern. Die Erhöhung des Widerstands kann dabei durch eine entsprechende Ansteuerung der in den Gelenkpunkten zwischen Armgliedern des Roboterarms angeordneten Antriebseinheiten erfolgen.

Die hierdurch erzeugte Rückmeldung kann dann zur Orientierung in komplexeren Interaktionen dienen, wie bspw. haptischen Menüs, oder als eine Art Bestätigung, wenn eine vorherbestimmte haptische Geste von der Steuereinheit erkannt wurde.

Die Erfindung betrifft darüber hinaus auch ein Verfahren zur Steuerung eines Robotersystems, das zumindest einen Roboterarm, eine Steuereinheit zur Steuerung des Roboterarms und eine Roboterarm-Sensorik aufweist, aufweisend die Schritte:
- Manipulieren des Roboterarms durch zumindest eine vorherbestimmte haptische Geste;
- Erzeugen von Signalen durch die Roboterarm-Sensorik in Abhängigkeit der vorherbestimmten haptischen Geste;
- Übertragen der Signale in die Steuereinheit; und
- Zuordnen der Signale zu unterschiedlichen vorherbestimmten Operationen durch die Steuereinheit.

Weitere Schritte des erfindungsgemäßen Verfahrens umfassen
- Erzeugen zumindest einer Rückmeldung in Abhängigkeit der unterschiedlichen vorherbestimmten Operationen; sowie
- Einstellen der Nachgiebigkeit des Roboterarms in Abhängigkeit einer vorherbestimmten haptischen Geste.

Es wird deutlich, dass die Erfindung auf einfache Art und Weise bereits im Robotersystem vorhandene Komponenten nutzt, um das Interaktionsfeld für ein solches Robotersystem zu erweitern.

Grundsätzlich sind der Art und Weise, wie hierfür vorherbestimmte haptische Gesten diversen vorbestimmten Operationen zugeordnet werden sollen, keine Grenzen gesetzt.

Das Prinzip der haptisch gesteuerten Führung des Roboterarms, wobei der Roboterarm quasi selbst als eine Eingabevorrichtung fungiert, kann für diverse Interaktionen herangezogen werden.

So kann eine derartige Steuerung beispielweise bei der Programmierung des Robotersystems und auch bei der Parametrierung von einzelnen durchzuführenden Operationen verwendet werden, wodurch sich die Rüstzeiten bei gleichzeitiger Kostenminimierung für solche Robotersysteme reduzieren lassen.

Darüber hinaus ist es denkbar, dass das Robotersystem im Betrieb in einer MRK-Umgebung haptisch angesteuert wird. Z.B. kann ein kräftiger Schlag des Bedieners gegen den Roboterarm einen Notfall im Arbeitsbereich signalisieren, wodurch das Robotersystem zum Abbruch gezwungen wird. Hierdurch wird die Reaktionszeit verkürzt, da der Bediener nicht erst in die Nähe eines Notschalters gelangen muss, um diesen zu bedienen.

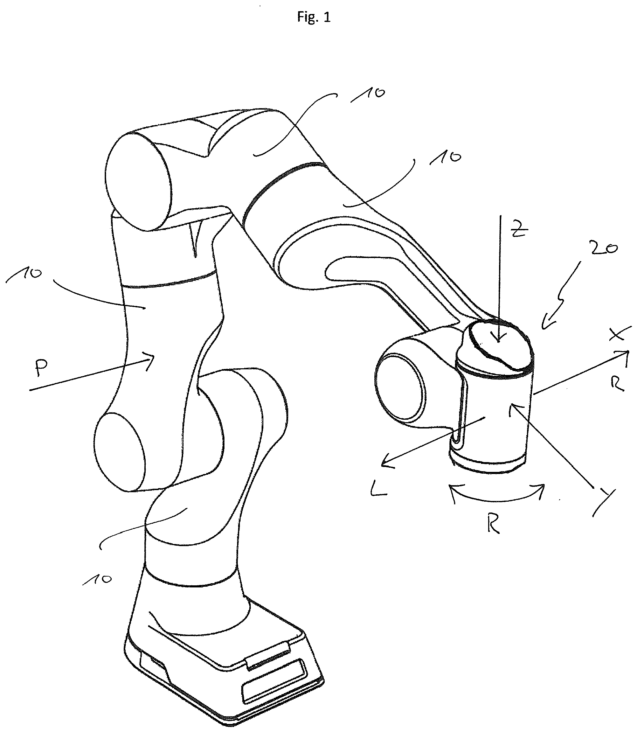

Weitere Merkmale und Vorteile ergeben sich aus der nachfolgenden Beschreibung eines anhand der einzigen Figur 1 gezeigten Ausführungsbeispiels.

In der Fig. 1 ist in perspektivischer Ansicht ein mehrachsiger Leichtbauroboter gezeigt, der aus mehreren gelenkig miteinander verbunden Armgliedern 10 zusammengesetzt ist.

Am Beispiel des vorderen Glieds 20, das mit einem nicht dargestellten Endeffektor zusammenwirkt, sind schematisch die möglichen Richtungen angegeben, die durch haptische Gesten auf das Robotersystem einwirken können.

So ist es möglich, dass ein Bediener auf das Glied 20 Zugoder Druckkräfte in den Richtungen X, Y, Z ausübt.

Ein leichtes Drücken auf das Glied 20 in Z-Richtung kann beispielsweise das Drücken eines Tastschalters symbolisieren, wobei dieser haptischen Geste dann ein Start-Befehl zugeordnet ist, der eine vorherbestimmte Operation aktiviert.

Durch seitliches Drücken des Glieds 20 nach links (L) oder rechts (R) kann der Bediener durch ein komplexes Menü einer graphischen Benutzeroberfläche auf einer nicht dargestellten Anzeigevorrichtung, wie dem Bildschirm eines Rechners, geführt werden. Durch Drücken in Z- oder Y-Richtung kann der im graphischen Menü durch diese haptischen Gesten ausgewählte Eintrag dann bestätigt werden.

Ebenso ist es möglich, die Bewegung des Glieds 20 in der X-Y-Ebene auf die Bewegung eines Mauszeigers auf einem Bildschirm zu übertragen sowie durch Drücken in Z-Richtung einen "Mausklick" auszuführen.

Des Weiteren ist es möglich, dass der Bediener auf das Glied 20 eine haptische Drehung R ausführt, wobei die Höhe des dadurch aufgebrachten Drehmoments als Signal für die Stärke eines durch diese Drehung auszuwählenden Parameters herangezogen werden kann. Die haptische Drehung in R-Richtung simuliert hierbei quasi einen Drehregler.

Für einen Notfall kann es vorgesehen sein, dass ein Bediener einfach gegen den Roboterarm schlägt, angedeutet durch Pfeil P. Das Robotersystem erkennt anhand der Kraft bzw. der Beschleunigung, dass es sich um einen solchen Notfall handelt und unterbricht dann unverzüglich seine Bewegung.

Die haptischen Gesten sind nicht auf das vorderste Glied 20 beschränkt. Prinzipiell kann jedes einzelne Armglied 10 mit einer solchen Funktionalität versehen sein.

Darüber hinaus ist es möglich, dass durch virtuelle, da frei programmierbare Widerstände beim Bewegen des Roboterarms das Verhalten von physikalischen Oberflächen, Knöpfen oder Drehreglern simuliert werden kann. Auf diese Weise kann das Robotersystem für sich selbst als eine Steuer- bzw. Eingabevorrichtung verwendet werden, um komplexe Systeme und Operationen anzusteuern, die in einem engen funktionalen Zusammenhang mit dem Robotersystem bzw. seiner gewünschten Funktionsweise stehen.

## Patentansprüche

1. Robotersystem aufweisend zumindest einen Roboterarm (10,20), eine Steuereinheit zur Steuerung des Roboterarms (10,20) und eine Roboterarm-Sensorik mit Kraftmesssensoren, Drehmomentsensoren und/oder Berührungssensoren, die Kräfte und Drehmomente aufnehmen, die durch eine haptische Geste (P,R) eines Benutzers auf den Roboterarm einwirken, wobei die Steuereinheit und Roboterarm-Sensorik so ausgelegt sind, dass sie auf vorherbestimmte haptische Gesten (P,R) des Benutzers, die auf den Roboterarm (10,20) wirken, so reagieren, dass das Robotersystem mindestens eine vorherbestimmte Operation ausführt, die der haptischen Geste (P,R) zugeordnet ist, **dadurch gekennzeichnet, dass**
die haptische Geste (P,R) einer Steuerung auf der graphischen Benutzeroberfläche einer Anzeigevorrichtung des Robotersystems zugeordnet ist.

2. Robotersystem nach Anspruch 1, bei dem die durch die haptische Geste (P,R) erzeugten Kräfte und/oder Momente in Abhängigkeit ihrer jeweiligen Richtungen unterschiedlichen Operationen zugeordnet sind.

3. Robotersystem nach Anspruch 1 oder 2, bei dem die durch die haptische Geste (P,R) erzeugten Kräfte und/oder Momente in Abhängigkeit ihrer jeweiligen Größen unterschiedlichen Operationen zugeordnet sind.

4. Robotersystem nach einem der Ansprüche 1 bis 3, bei dem eine unterschiedliche zeitliche Abfolge von haptischen Gesten unterschiedlichen Operationen zugeordnet ist.

5. Robotersystem nach einem der Ansprüche 1 bis 4, bei dem die Steuereinheit ausgebildet ist, eine Rückmeldung in Abhängigkeit der haptischen Geste (P,R) zu erzeugen.'

6. Robotersystem nach Anspruch 5, bei dem die Rückmeldung auditiv und/oder visuell ausgebildet ist.

7. Robotersystem nach Anspruch 5, bei dem die Rückmeldung haptisch erfassbar ausgebildet ist.

8. Robotersystem nach Anspruch 7, bei dem die Nachgiebigkeit des Roboterarms (10,20) veränderbar ist.

9. Verfahren zur Steuerung auf der graphischen Benutzeroberfläche einer Anzeigevorrichtung eines Robotersystem, das zumindest einen Roboterarm (10,20), eine Steuereinheit zur Steuerung des Roboterarms (10,20) und eine Roboterarm-Sensorik mit Kraftmesssensoren, Drehmomentsensoren und/oder Berührungssensoren, die Kräfte und Drehmomente aufnehmen, die durch eine haptische Geste (P,R) auf den Roboterarm einwirken, aufweist, aufweisend die Schritte:
- Manipulieren des Roboterarms (10,20) durch zumindest eine vorherbestimmte haptische Geste (P,R);
- Erzeugen von Signalen durch die Roboterarm-Sensorik in Abhängigkeit der vorherbestimmte haptischen Geste (P,R);
- Übertragen der Signale in die Steuereinheit; und
- Zuordnen der Signale zu unterschiedlichen vorherbestimmten Operationen durch die Steuereinheit, die der graphischen Benutzeroberfläche zugeordnet sind.

10. Verfahren nach Anspruch 9, weiter aufweisend:
- Erzeugen zumindest einer Rückmeldung in Abhängigkeit der unterschiedlichen vorherbestimmten Operationen.

11. Verfahren nach Anspruch 10, weiter aufweisend:
- Einstellen der Nachgiebigkeit des Roboterarms (10,20) in Abhängigkeit einer vorherbestimmten haptischen Geste (P,R).

## Claims

1. Robotic system having at least one robot arm (10,20), a control unit for controlling the robot arm (10,20) and a robot arm sensor system comprising force measurement sensors, torque sensors and/or touch sensors which record forces and torques acting on the robot arm by a haptic gesture (P,R) of a user, wherein the control unit and the robot arm sensor system are adapted to respond to predetermined haptic gestures (P,R) of the user acting on the robot arm (10,20) such that the robotic system performs at least one predetermined operation associated with the haptic gesture (P,R),
**characterized in that**
the haptic gesture (P,R) is associated with a control on the graphical user interface of a display device of the robotic system.

2. Robotic system according to claim 1, in which the forces and/or torques generated by the haptic gesture (P,R) are assigned to different operations depending on their respective directions.

3. Robotic system according to claim 1 or 2, in which the forces and/or torques generated by the haptic gesture (P,R) are assigned to different operations depending on their respective variables.

4. Robotic system according to one of claims 1 to 3, in which a different chronological sequence of haptic gestures is assigned to different operations.

5. Robotic system according to one of claims 1 to 4, in which the control unit is adapted to generate a feedback in response to the haptic gesture (P,R).

6. Robotic system according to claim 5, in which the feedback is formed to be auditory and/or visual.

7. Robotic system according to claim 5, in which the feedback is formed to be haptically detectable.

8. Robotic system according to claim 7, in which the compliance of the robot arm (10,20) is variable.

9. Method for controlling on a graphical user interface of a display device of a robotic system comprising at least one robot arm, a control unit for controlling the robot arm (10,20) and a robot arm sensor system comprising force measurement sensors, torque sensors and/or touch sensors which record forces and torques acting on the robot arm by a haptic gesture (P,R), comprising the steps:
- manipulating the robot arm (10,20) by at least one predetermined haptic gesture (P,R);
- generating signals by the robot arm sensor system in response to the predetermined haptic gesture (P,R);
- transmitting the signals into the control unit; and
- assigning the signals to different predetermined operations by the control unit, which are associated to the graphical user interface.

10. Method according to claim 9, further comprising:
- generating at least one feedback depending on the different predetermined operations.

11. Method according to claim 10, further comprising:
- adjusting the compliance of the robot arm (10,20) depending on a predetermined haptic gesture (P,R).

## Revendications

1. Système robot présentant au moins un bras de robot (10,20), une unité de commande pour commander le bras de robot (10, 20) et un système de détection de bras de robot avec des détecteurs de mesure de force, des détecteurs de couple de rotation et/ou des détecteurs de contact qui enregistrent des forces et des couples de rotation qui agissent sur le bras de robot du fait d'un geste tactile (P, R) d'un utilisateur, dans lequel l'unité de commande et le système de détection du bras de robot sont conçus de façon à réagir à des gestes tactiles (P, R) prédéterminés de l'utilisateur qui agissent sur le bras de robot (10, 20) de telle sorte que le système robot exécute au moins une opération prédéterminée qui est associée au geste tactile (P, R), **caractérisé en ce que** le geste tactile (P, R) est associé à une commande sur l'interface utilisateur graphique d'un dispositif d'affichage du système robot.

2. Système robot selon la revendication 1, dans lequel les forces et/ou les couples générés par le geste tactile (P, R) sont associés à des opérations différentes en fonction de leurs directions respectives.

3. Système robot selon la revendication 1 ou 2, dans lequel les forces et/ou les couples générés par le geste tactile (P, R) sont associés à des opérations différentes en fonction de leurs dimensions respectives.

4. Système robot selon une des revendications 1 à 3, dans lequel une succession temporelle différente de gestes tactiles (P, R) est associée à des opérations différentes.

5. Système robot selon une des revendications 1 à 4, dans lequel la commande est conçue pour générer une réponse en fonction du geste tactile (P, R).

6. Système robot selon la revendication 5, dans lequel la réponse est sonore et/ou visuelle.

7. Système robot selon la revendication 5, dans lequel la réponse est conçue de façon enregistrable.

8. Système robot selon la revendication 7, dans lequel la flexibilité du bras de robot (10 20) est modifiable.

9. Procédé de commande sur l'interface utilisateur graphique d'un dispositif d'affichage d'un système robot qui présente au moins un bras de robot (10,20), une unité de commande pour commander le bras de robot (10, 20) et un système de détection de bras de robot avec des détecteurs de mesure de force, des détecteurs de couple de rotation et/ou des détecteurs de contact qui enregistrent des forces et des couples de rotation qui agissent sur le bras de robot du fait d'un geste tactile (P, R), présentant les étapes suivantes :
- manipulation du bras de robot (10, 20) par au moins un geste tactile (P, R) prédéterminé,
- génération de signaux par le système de détection du bras de robot en fonction du geste tactile (P, R) prédéterminé,
- transmission des signaux à l'unité de commande et
- association des signaux par l'unité de commande à différentes opérations prédéterminées qui sont associées à l'interface utilisateur graphique.

10. Procédé selon la revendication 9, comprenant en outre l'étape suivante :
- génération d'au moins une réponse en fonction des différentes opérations prédéterminées.

11. Procédé selon la revendication 10, comprenant en outre l'étape suivante :
- réglage de la flexibilité du bras de robot (10, 20) en fonction d'un geste tactile (P, R) prédéterminé.
